Europäisches Patentamt

European Patent Office

Office européen des brevets

(11) Veröffentlichungsnummer : **0 200 899**
**B1**

(12)                    EUROPÄISCHE PATENTSCHRIFT

(45) Veröffentlichungstag der Patentschrift :
25.05.88

(51) Int. Cl.⁴ : **B 60 H   1/32**

(21) Anmeldenummer : 86103964.2

(22) Anmeldetag : 22.03.86

(54) Vorrichtung zur Belüftung und Klimatisierung von Fahrerplätzen, Fahrerhäusern od. dgl.

(30) Priorität : 02.05.85 DE 3515853

(43) Veröffentlichungstag der Anmeldung :
12.11.86 Patentblatt 86/46

(45) Bekanntmachung des Hinweises auf die Patenterteilung : 25.05.88 Patentblatt 88/21

(84) Benannte Vertragsstaaten :
BE FR GB IT

(56) Entgegenhaltungen :
DE-A- 2 613 666
DE-A- 2 757 415
FR-A- 2 440 281
GB-A- 2 128 322
US-A- 3 524 398

(73) Patentinhaber : AURORA Konrad G. Schulz GmbH &
Co
Südring 4
D-6933 Mudau/Odenwald (DE)

(72) Erfinder : Schulz, Joachim
Neudorfer Strasse 2
D-8762 Amorbach (DE)

(74) Vertreter : Splanemann, Rainer, Dipl.-Ing. et al
Patentanwälte Dipl.-Ing. R. Splanemann, Dr. B.
Reitzner Tal 13
D-8000 München 2 (DE)

## Beschreibung

Die Erfindung betrifft eine Vorrichtung zur Belüftung und Klimatisierung von Fahrerplätzen, Fahrerhäusern od. dgl. für Zugmaschinen, Traktoren, Baumaschinen, Arbeitsmaschinen od. dgl. der im Oberbegriff von Anspruch 1 angegebenen Art.

Bei derartigen Vorrichtungen ist es bekannt, den Verdampfer, das Gebläse und gegebenenfalls den Wärmetauscher in einem Gehäuse anzuordnen, das einen Boden, eine Decke und Seitenwände hat, die mit den Lufteintritts- und -austrittsöffnungen versehen sind. Außerdem sind in den Seitenwänden Durchführungen für Schläuche bzw. Rohrleitungen vorgesehen, die an den Verdampfer und gegebenenfalls Wärmetauscher angeschlossen sind. Die so gebildete Einheit wird an der Dachkonstruktion des Fahrerplatzes, Fahrerhauses od. dgl. befestigt, wobei sich insbesondere bei gewölbten oder in sonstiger Weise unregelmäßig gestalteten Dächern der Nachteil ergibt, daß der Dachraum nicht optimal ausgenutzt werden kann. So ragt die Vorrichtung bei bekannten Anordnungen häufig zu weit in das Fahrerhaus hinein und reduziert dadurch den freien Bewegungsraum für das Bedienungspersonal, sofern nicht sogar eine Unfallgefahr gegeben ist. Außerdem müssen Schläuche und Rohrleitungen von dem Gehäuse zu den Seitenwänden des Fahrerhauses geführt werden, was ebenfalls störend wirkt, zumal das Entwässerungsrohr des Wasserfangs des Verdampfers ein ausreichendes Gefälle aufweisen muß.

Demgegenüber ist es Aufgabe der vorliegenden Erfindung, eine Vorrichtung zur Belüftung und Klimatisierung von Fahrerplätzen, Fahrerhäusern od. dgl. zu schaffen, bei der der Verdampfer der Klimaanlage in dem am höchsten liegenden Bereich der Dachkonstruktion angeordnet werden kann und deren Raumbedarf auf ein Minimum reduziert ist.

Zur Lösung dieser Aufgabe werden erfindungsgemäß die kennzeichnenden Merkmale von Anspruch 1 vorgeschlagen.

Hierdurch wird der Vorteil erreicht, daß der gesamte von der Dachkonstruktion und der Basisplatte umschlossene Raum zur Unterbringung der Geräte der Vorrichtung zur Belüftung, Klimatisierung und gegebenenfalls Beheizung des Fahrerplatzes, des Fahrerhauses od. dgl. zur Verfügung steht. Der Materialaufwand für das Gehäuse ist praktisch auf den für die Basisplatte beschränkt, zumal die Dachkonstruktion mit ihren Traversen und dem Dach bereits einen geschlossenen Raum bildet. Dieser Raum wird durch die Trennwand quer zur Strömungsrichtung geteilt, und der Verdampfer der Klimaanlage ist einer Durchbrechung in der Trennwand unmittelbar zugeordnet, wobei der Verdampfer direkt an der Trennwand befestigt sein kann. Hierdurch wird ermöglicht, daß sowohl die Durchbrechung als auch der Verdampfer unmittelbar unterhalb des Dachs angeordnet werden können, so daß innerhalb der Dachkonstruktion bzw. oberhalb der Basisplatte noch ein ausreichendes Gefälle für das Abführen von Kondenswasser aus dem Wasserfang des Verdampfers zur Verfügung steht.

Ein weiterer Vorteil der erfindungsgemäßen Vorrichtung besteht darin, daß die Umfangsabmessungen der Trennwand zunächst größer sind als der gesamte Querschnitt des Raums, der durch die Dachkonstruktion und die Basisplatte gebildet wird, und der Rand der Trennwand erst beim Einbau der Vorrichtung in die Dachkonstruktion deren Querschnitt angepaßt wird. Dadurch ist die Vorrichtung verschiedenen Dachkonstruktionen von Fahrerhäusern individuell anpaßbar. Die Durchbrechung in der Trennwand ist vorzugsweise nach oben in Richtung des Dachs offen, so daß stets sichergestellt ist, daß auch der Verdampfer im am höchsten liegenden Bereich der Dachkonstruktion angeordnet wird. Hierdurch wird ermöglicht, daß auch die Basisplatte ziemlich dicht an das Dach herangerückt werden kann, wodurch ein flacherer Raum zur Aufnahme der Vorrichtung entsteht, was jedoch gleichzeitig die Kopffreiheit für das Bedienungspersonal am Fahrerplatz bzw. im Fahrerhaus vergrößert.

Weitere vorteilhafte Ausgestaltungen der Erfindung sind in den weiteren Unteransprüchen unter Schutz gestellt.

In der Zeichnung sind Ausführungsbeispiele der Erfindung wiedergegeben, die anhand der nachfolgenden Beschreibung näher erläutert werden. Es zeigt :

Fig. 1 die Vorrichtung mit ebener Basisplatte innerhalb der Dachkonstruktion eines Fahrerhauses,

Fig. 2 die Trennwand in Verbindung mit einer symmetrisch verformten Basisplatte und

Fig. 3 die Trennwand in Verbindung mit einer asymmetrisch verformten Basisplatte.

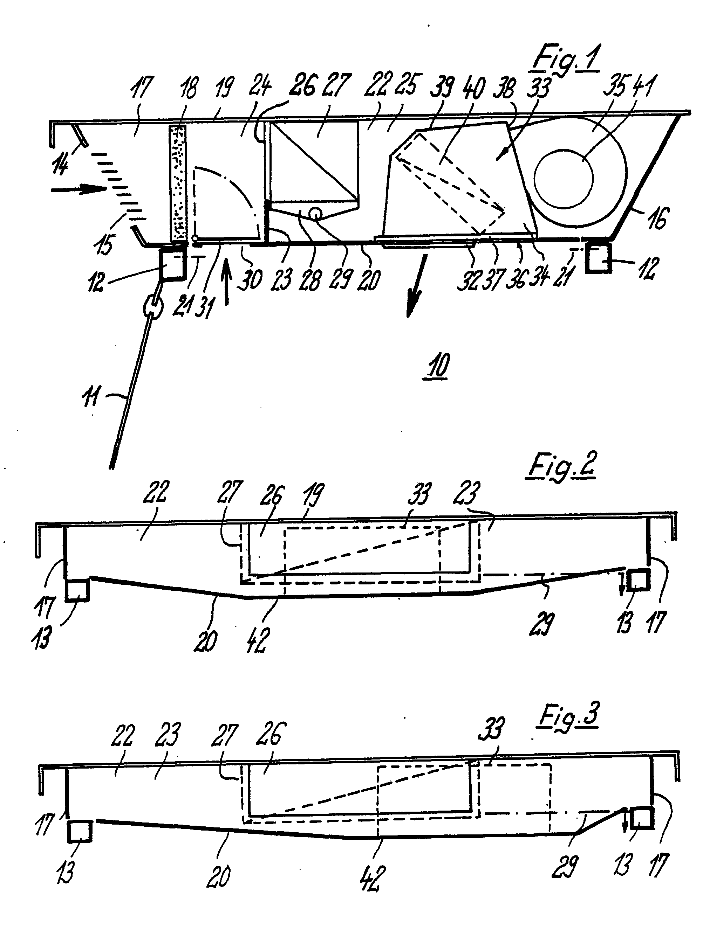

Fig. 1 zeigt im Längsschnitt die Dachkonstruktion eines Fahrerhauses mit einem Innenraum 10 für den Fahrer und einer Windschutzscheibe 11. Die Dachkonstruktion ruht auf Traversen 12 und Längsholmen 13. Oberhalb von diesen befinden sich eine vordere Stirnwand 14, gegebenenfalls mit einem Frischlufteintrittsgrill 15, eine hintere Stirnwand 16 und Seitenwände 17. Sofern ein Frischlufteintrittsgrill 15 vorgesehen ist, kann diesem in Strömungsrichtung ein Filter 18 nachgeschaltet sein. An den oberen Rändern der Stirnwände 14 und 16 sowie der Seitenwände 17 ist ein Dach 19 befestigt. Dieses kann — wie in den Zeichnungen dargestellt — flach sein. Es kann jedoch auch gewölbt oder in anderer Weise im Zentrum erhöht sein. Zwischen den Traversen 12 und den Längsholmen 13 erstreckt sich parallel zum Dach 19 und unter Abstand von diesem eine Basisplatte 20, die vom Innenraum 10 her einsetzbar ist und durch Halteelemente 21, in Form von federnden Nocken, Klammern od. dgl., in Stellung gehalten wird.

Zwischen dem Dach 19 und der Basisplatte 20 befindet sich ein abgeschlossener Raum 22, der durch eine Trennwand 23 in einen Lufteintrittsbereich 24 und einen Luftbehandlungsbereich 25 geteilt ist. Die Trennwand 23 ist mit einer Durchbrechung 26 versehen, deren Abmessungen dem Luftdurchlaßquerschnitt eines Verdampfers 27 angepaßt sind, der in Strömungsrichtung unmittelbar hinter Durchbrechung 26 an der Wand 23 befestigt ist. Er kann auch unmittelbar am Dach 19 befestigt sein oder auf einer Konsole ruhen, die auf der Basisplatte 20 angeordnet ist. Unterhalb des Verdampfers 27 befindet sich ein Wasserfang 28 zum Sammeln von Kondenswasser, das über eine Rohrleitung 29 abgeleitet werden kann.

Die Trennwand 23 ist unter einem rechten Winkel zu der Basisplatte 20 angeordnet. Sie kann mit der Basisplatte 20 fest verbunden sein. Ihr freier Rand bildet nicht nur gegenüber der Basisplatte 20, sondern auch den Seitenwänden 17 und dem Dach 19 einen strömungsdichten Abschluß. Zu diesem Zweck werden die Umfangsabmessungen der Trennwand 23 bei der Fertigung größer gewählt als der gesamte Querschnitt des Raums 22. Erst beim Einbau der Vorrichtung wird der Rand der Trennwand 23 zugeschnitten, damit die Trennwand 23 dem Querschnitt der Dachkonstruktion genau angepaßt ist. Die Trennwand 23 kann aus glasfaserverstärktem Polyester, vakuumgezogenem Kunststoff, Aluminiumblech oder Sperrholz bestehen. Wie aus Fig. 2 und 3 ersichtlich, ist die Durchbrechung 26 in der Trennwand 23 nach oben offen, so daß der Verdampfer 27 unmittelbar unterhalb des Dachs 19 angeordnet werden kann. Die nach oben offene Durchbrechung 26 erleichtert auch das Anpassen der Trennwand 23 an beliebige Dach-Formen.

Die Abdichtung im Bereich des freien Umfangsrands der Trennwand 23 kann auch durch eine nicht dargestellte Schaumstoffauskleidung der Dachkonstruktion erreicht werden, wobei eine derartige Schaumstoffauskleidung gleichzeitig den Vorteil hat, daß der Umfangsrand der Basisplatte 20 an den Stirnseiten der Schaumstoffauskleidung dichtend zur Anlage gebracht werden kann.

Bei dem in Fig. 1 dargestellten Ausführungsbeispiel weist die Basisplatte 20 eine Umlufteintrittsöffnung 30 im Bereich der vorderen Traverse 12 auf, die durch eine Klappe 31 verschließbar ist. Die Klappe 31 ist unmittelbar hinter dem Filter 18 innerhalb des Lufteintrittsbereichs 24 angeordnet, wobei die Abmessungen der Klappe 31 auf der Austrittsseite des Filters 18 auch derart gewählt werden können, daß das Mischungsverhältnis Frischluft/Umluft voreinstellbar ist. Es kann auch thermostatisch gesteuert werden. Die Frischlufteintrittsöffnung 15 und die Umlufteintrittsöffnung 30 können auch alternativ vorgesehen sein.

Die Trennwand 23 ist in Strömungsrichtung unmittelbar hinter dem Lufteintrittsbereich 24 angeordnet. Auf diese Weise wird der Verdampfer 27 der Klimaanlage unmittelbar von Umluft und/oder Frischluft beaufschlagt.

Die aus dem Verdampfer 27 austretende Kaltluft kann von dem Luftbehandlungsbereich 25 aus über Luftaustrittsdüsen 32 in der Basisplatte 20 direkt in den Innenraum 10 gelenkt werden, wobei die Stärke des Luftstroms durch Stellorgane an den Luftaustrittsdüsen 32 regulierbar sein kann.

Bei dem in Fig. 1 dargestellten Ausführungsbeispiel ist jedoch innerhalb des Luftbehandlungsbereichs 25 eine Einheit 33 vorgesehen, die aus einer einstückigen Wanne 34 und einem Gebläse 35 besteht. Die Wanne 34 ist ein einstückiger Kunststoff-Formteil mit einer offenen Basisseite 36, die von einem Flansch 37 umschlossen ist, durch den die Wanne 34 derart abgedichtet auf der Basisplatte 20 befestigt ist, daß nur der Innenraum der Wanne 34 mit den Luftaustrittsdüsen 32 in Verbindung steht. Die Wanne 34 hat in Richtung eines Bodens 39 konvergierende Stirn- und Seitenwände, wobei an der zu der Basisplatte 20 geneigten Seitenwand 38 das Radialgebläse 35 befestigt ist. Zu diesem Zweck ist die Seitenwand 38 mit Lufteintrittsöffnungen und Anschlüssen für das oder die Gebläse 35 versehen. Innerhalb der Wanne 34 sind Elemente in Form von Konsolenflächen vorgesehen, die zur Anbringung und Ausrichtung eines Wärmetauschers 40 vorgesehen sind, sofern die durch den Verdampfer 27 hindurchtretende Luft erwärmt werden soll.

Der Boden 39 der Wanne 34 erstreckt sich im wesentlichen parallel zum Dach 19, jedoch unter Abstand von diesem. Außerdem ist die Wanne 34 wesentlich schmaler als der Abstand zwischen den Seitenwänden 17, so daß die Wanne 34 innerhalb des Luftbehandlungsbereichs 25 widerstandsfrei von Luft umspült werden kann, die dann in die Saugstutzen 41 des oder der Gebläse 35 eintritt, gegebenenfalls durch den Wärmetauscher 40 innerhalb der Wanne 34 erwärmt und schließlich durch die Luftaustrittsdüsen 32 in den Innenraum 10 gelenkt wird.

Die Basisplatte 20 kann gemäß Fig. 2 einen zentralen Abschnitt 42 aufweisen, der von dem im wesentlichen parallelen Dach 19 einen größeren Abstand aufweist, als die übrigen Bereiche der Basisplatte 20. Auf dem zentralen Abschnitt 42 ist zweckmäßigerweise die Einheit 33 angeordnet.

Es besteht jedoch auch die Möglichkeit, den zentralen Abschnitt 42 gemäß Fig. 3 seitlich zu versetzen, wodurch für einen seitlichen Einstieg, beispielsweise im Bereich des linken Längsholms 13, eine vermehrte Kopffreiheit erreicht wird.

Trotz der asymmetrischen Anordnung der Einheit 33 kann die Durchbrechung 26 und damit der Verdampfer 27 symmetrisch vorgesehen werden, wie es in Fig. 3 gezeigt ist. Gleichwohl ist eine Versetzung auch der Durchbrechung 26 und des Verdampfers 27 in Fig. 3 nach rechts möglich.

Bei allen Ausführungsbeispielen ist sichergestellt, daß die Rohrleitung 29 zum Abführen des Kondenswassers ein ausreichendes Gefälle hat, um beispielsweise noch über einen Längsholm 13 hinweggeführt werden zu können.

Obgleich gemäß Fig. 1 die Frischlufteintrittsöffnung entgegen in die Fahrtrichtung weist und demgemäß im Staudruckbereich liegt, kann sie auch in der hinteren Stirnwand 16 vorgesehen werden. Die Einheit 34 wird dann lediglich in Richtung der Windschutzscheibe 11 verschoben. Das Filter 18 wird dem Frischlufteintrittsgrill zugeordnet und unmittelbar im Anschluß an den hinten liegenden Lufteintrittsbereich wird in Strömungsrichtung die Trennwand 23 mit dem Verdampfer 27 angeordnet. In dem hinten liegenden Eintrittsbereich kann auch eine Umlufteintrittsöffnung 30 nebst Klappe 31 vorgesehen werden.

**Patentansprüche**

1. Vorrichtung zur Belüftung und Klimatisierung von Fahrerplätzen, Fahrerhäusern od. dgl. für Zugmaschinen, Traktoren, Baumaschinen, Arbeitsmaschinen od. dgl., mit einem Lufteintrittsbereich (24) und diesem in Strömungsrichtung nachgeschalteten Verdampfer (27) einer Klimaanlage, Gebläse (35) und gegebenenfalls Wärmetauscher (40), der beispielsweise an den Kühlmittelkreislauf einer Verbrennungskraftmaschine anschließbar ist, wobei die Vorrichtung an der Dachkonstruktion des Fahrerplatzes, Fahrerhauses od. dgl. fixierbar ist und Luftaustrittsöffnungen (32) zu diesem aufweist, dadurch gekennzeichnet, daß die Vorrichtung eine Basisplatte (20) aufweist, die als Abschluß für einen durch die Dachkonstruktion und die Basisplatte (20) gebildeten Raum (22) ausgebildet ist, und unter einem rechten Winkel zu der Basisplatte (20) eine Trennwand (23) vorgesehen ist, die quer zur Strömungsrichtung den gesamten Raum (22) teilend angeordnet ist, der der Verdampfer (27) zugeordnet ist und die eine Durchbrechung (26) aufweist, deren Abmessungen dem Luftdurchlaßquerschnitt des Verdampfers (27) angepaßt sind.

2. Vorrichtung nach Anspruch 1, dadurch gekennzeichnet, daß die Trennwand (23) an der Basisplatte (20) befestigt ist.

3. Vorrichtung nach Anspruch 1 oder 2, dadurch gekennzeichnet, daß die Umfangsabmessungen der Trennwand (23) zunächst größer sind als der gesamte Querschnitt des Raums (22) und der Rand der Trennwand (23) erst beim Einbau der Vorrichtung in die Dachkonstruktion deren Querschnitt anpaßbar ist.

4. Vorrichtung nach einem der Ansprüche 1 bis 3, dadurch gekennzeichnet, daß die Trennwand (23) in Strömungsrichtung unmittelbar hinter dem Lufteintrittsbereich (24) angeordnet ist.

5. Vorrichtung nach Anspruch 4, dadurch gekennzeichnet, daß der Lufteintrittsbereich (24) in der Basisplatte (20) eine durch eine Klappe (31) verschließbare Umlufteintrittsöffnung (30) aufweist.

6. Vorrichtung nach Anspruch 4 oder 5, dadurch gekennzeichnet, daß der Lufteintrittsbereich (24) eine Frischlufteintrittsöffnung (15) aufweist, der ein Filter (18) nachgeschaltet sein kann.

7. Vorrichtung nach einem der Ansprüche 1 bis 6, dadurch gekennzeichnet, daß der Austrittsseite des Filters (18) und der Umlufteintrittsöffnung (30) eine steuerbare Klappe (31) zugeordnet ist, durch die das Mischungsverhältnis Frischluft/Umluft voreinstellbar ist.

8. Vorrichtung nach einem der Ansprüche 1 bis 7, dadurch gekennzeichnet, daß die Dachkonstruktion mit einer Schaumstoffauskleidung versehen ist, an der der freie Umfangsrand der Trennwand (23) dichtend anliegt.

9. Vorrichtung nach einem der Ansprüche 1 bis 8, dadurch gekennzeichnet, daß der Umfangsrand der Basisplatte (20) an der Schaumstoffauskleidung dichtend anliegt.

10. Vorrichtung nach einem der Ansprüche 1 bis 9, dadurch gekennzeichnet, daß die Basisplatte (20) einen zentralen Abschnitt (42) aufweist, der von dem im wesentlichen parallelen Dach (19) einen größeren Abstand aufweist, als die übrigen Abschnitte der Basisplatte (20).

11. Vorrichtung nach Anspruch 10, dadurch gekennzeichnet, daß der zentrale Abschnitt (42) seitlich versetzt ist.

12. Vorrichtung nach einem der Ansprüche 1 bis 11, dadurch gekennzeichnet, daß auf der gleichen Seite der Basisplatte (20) wie die Trennwand (23) eine Einheit (33) befestigt ist, die als einstückige Wanne (34) mit einer offenen Basisseite (36) ausgebildet ist, die durch die Basisplatte (20) verschlossen ist, wobei eine der Seitenwände (38) mit mindestens einer Lufteintrittsöffnung und Anschlüssen für mindestens ein Gebläse (35) versehen ist und innerhalb der Wanne (34) Elemente zur Anbringung des Wärmetauschers (40) vorgesehen sind.

**Claims**

1. An apparatus for the ventilation and air-conditioning of driver's cabs, operator's compartments or the like for traction engines, tractors, construction equipment, operating machinery or the like, with an air-inlet zone (24) and an evaporator (27) of an air-conditioning system arranged downstream of said zone in the flow direction, a blower (35) and, optionally, a heat exchanger (40) which can be connected, for example, to the coolant circuit of an internal combustion engine, wherein the apparatus can be mounted on the roof structure of the driver's cab, operator's compartment or the like and has air-outlet apertures (32) into the latter, characterised in that the apparatus has a base plate (20) in the form of a closure for a chamber (22) formed by the roof structure and the base plate (20), and at a right angle to the base plate (20) there is provided a dividing wall (23) which is disposed transversely to the flow direction to divide the entire chamber (22), with which the evaporator (27) is associated, and which has an opening (26) the dimensions of which match the air passage cross-section of the evaporator (27).

2. An apparatus according to Claim 1, characterised in that the dividing wall (23) is secured to the base plate (20).

3. An apparatus according to Claim 1 or 2, characterised in that the peripheral dimensions of the dividing wall (23) are initially larger than the entire cross-section of the chamber (22) and only upon installation of the apparatus in the roof structure is the edge of the dividing wall (23) adapted to the cross-section thereof.

4. An apparatus according to any one of Claims 1 to 3, characterised in that, in the flow direction, the dividing wall (23) is disposed immediately downstream of the air-inlet zone (24).

5. An apparatus according to Claim 4, characterised in that in the base plate (20) the air-inlet zone (24) has an air recirculatation inlet aperture (30) which can be closed by a flap (31).

6. An apparatus according to Claim 4 or 5, characterised in that the air-inlet zone (24) has a fresh-air inlet aperture (15) and a filter (18) disposed downstream thereof.

7. An apparatus according to any one of Claims 1 to 6, characterised in that a controllable flap (31) is associated with the outlet side of the filter (18) and of the air recirculation inlet aperture (30), by means of which flap it is possible to preset the proportion of fresh air to recirculated air.

8. An apparatus according to any one of Claims 1 to 7, characterised in that the roof structure is provided with a foamed material lining, against which the free peripheral edge of the dividing wall (23) abuts in a sealed manner.

9. An apparatus according to any one of Claims 1 to 8, characterised in that the peripheral edge of the base plate (20) abuts in a sealed manner against the foamed material lining.

10. An apparatus according to any one of Claims 1 to 9, characterised in that the base plate (20) has a central portion (42) which is at a greater distance from the substantially parallel roof (19) than the other portions of the base plate (20).

11. An apparatus according to Claim 10, characterised in that the central portion (42) is offset laterally.

12. An apparatus according to any one of Claims 1 to 11, characterised in that a unit (33) is mounted on the same side of the base plate (20) as the dividing wall (23), which unit is in the form of a one-piece trough (34) with an open base side (36) and which is closed by the base plate (20), wherein one of its side walls (38) is provided with at least one air-inlet aperture and connections for at least one blower (35), and inside the trough (34) members are provided for installing the heat exchanger (40).

## Revendications

1. Dispositif de ventilation et de climatisation pour postes de conduite, cabines de conducteurs ou équivalents, pour tracteurs, engins de chantiers, machines de travail ou équivalents, comprenant une région d'entrée d'air (24) et, en aval de cette région dans le sens de l'écoulement, un évaporateur (27) appartenant à une installation de climatisation, un ventilateur (35) et, éventuellement un échangeur de chaleur (40) qui peut être raccordé, par exemple, au circuit de fluide de refroidissement d'un moteur à combustion interne, le dispositif pouvant être fixé à la structure du pavillon du poste de conduite, de la cabine du conducteur ou équivalent, et présentant des ouvertures de sortie d'air (32) qui mènent à ce poste, cette cabine ou équivalent, caractérisé en ce que le dispositif comprend une plaque de base (20) qui forme une cloison de fermeture pour un volume (22) formé par la structure de pavillon et la plaque de base (20), et qu'il est prévu, perpendiculairement à la plaque de base (20), une cloison (23) qui est disposée de manière à diviser l'ensemble du volume (22) transversalement à la direction de l'écoulement, cloison à laquelle l'évaporateur (27) est associé et qui présente une ouverture (26) dont les dimensions sont adaptées à la section de passage d'air de l'évaporateur (27).

2. Dispositif selon la revendication 1, caractérisé en ce que la cloison (23) est fixée à la plaque de base (20).

3. Dispositif selon la revendication 1 ou 2, caractérisé en ce que les dimensions périphériques de la cloison (23) sont au départ supérieures à la section transversale totale du volume (22) et que le bord de la cloison (23) n'est ajusté à la section de la structure du pavillon qu'au moment du montage du dispositif dans cette structure.

4. Dispositif selon une des revendications 1 à 3, caractérisé en ce que la cloison (23) est disposée immédiatement en arrière de la région d'entrée d'air (24), considéré dans le sens de l'écoulement.

5. Dispositif selon la revendication 4, caractérisé en ce que la région d'entrée d'air (24) présente, dans la plaque de base (20), une ouverture d'entrée d'air ambiant (30) qui peut être fermée par un volet (31).

6. Dispositif selon la revendication 4 ou 5, caractérisé en ce que la région d'entrée d'air (24) présente une ouverture d'entrée d'air neuf (15) en aval de laquelle peut être disposé un filtre (18).

7. Dispositif selon une des revendications 1 à 6, caractérisé en ce qu'au côté de sortie du filtre (18) et à l'ouverture d'entrée d'air ambiant (30), est associé un volet commandé (31) au moyen duquel on peut régler à l'avance le rapport de mélange air neuf/air ambiant.

8. Dispositif selon une des revendications 1 à 7, caractérisé en ce que la structure du pavillon est munie d'un revêtement de mousse de matière plastique contre lequel le bord périphérique libre de la cloison (23) est appuyé à joint étanche.

9. Dispositif selon une des revendications 1 à 8, caractérisé en ce que le bord périphérique de la plaque de base (20) est appuyé contre le revêtement de mousse de matière plastique en établissant un joint étanche.

10. Dispositif selon une des revendications 1 à 9, caractérisé en ce que la plaque de base (20) présente une partie centrale (42) qui se trouve à une distance du pavillon (19) sensiblement parallèle à cette partie, et à une distance supérieure à celle des autres parties de la plaque de base (20).

11. Dispositif selon la revendication 10, caractérisé en ce que la partie centrale (42) est déportée latéralement.

12. Dispositif selon une des revendications 1 à 11, caractérisé en ce que, sur le même côté de la plaque de base (20) que la cloison (23), est fixée une unité (33) qui est constituée par une cuvette d'une seule pièce (34) présentant une face de base ouverte (36) qui est fermée par la plaque de base (20), l'une des parois latérales (38) étant munie d'au moins une ouverture d'entrée d'air et de raccordements aboutissant à au moins un ventilateur (35), tandis que, à l'intérieur de cette cuvette (34), sont prévus des éléments pour le montage de l'échangeur de chaleur (40).

*Fig.1*

17  18  19  24  26 27  22 25  39 40 38  33  35 41

14

15

12

21 31  30  23 28 29 20  32 37 36 34 21  12

16

11

10

*Fig.2*

22  27  26  19  33  23

17
13

20  42

29  13  17

*Fig.3*

22  23  27  26  33

17
13

20  42

29  13  17

1